# EUROPEAN PATENT APPLICATION

(11) **EP 0 924 018 A2**
(43) Date of publication of application: **23.06.1999**
(21) Application number: 98310547.9
(22) Date of filing: 21.12.1998
(51) Int. Cl.: B23K 11/36, B23K 11/30

(54) **Welding adaptor**

(30) Priority: 19.12.1997 GB 9726939
(71) Applicant: R & W Cushway & Co. Limited, Waltham Abbey, Essex EN9 1HT (GB)
(72) Inventor: WATSON, Ronald Charles, London E4 8SA (GB)
(74) Representative: Robson, Aidan John

(57) **Abstract**

A welding adaptor for a welding head comprises a press-fit insulation pad which substantially covers the end of the welding tip portion of the adaptor. This causes welding operations to cease if the welding head becomes detached from the welding adaptor.

## Description

This invention relates to a resistance welding adaptor upon which a resistance welding cap is fitted.

Resistance welding apparatus is well known. In particular, resistance spot welding apparatus is well known and is used in automated production lines such as car manufacture, where the welding apparatus is robot controlled.

A welding head for use in a resistance spot welder is formed from a high conductivity copper alloy welding adaptor which is fitted on to a main holder usually with a taper fit or alternatively a screw fit. A welding cap then fits on the end of the welding adaptor with a smaller diameter taper fit. It is the welding cap that comes in contact with the material to be welded and through which current flows to make the weld.

Typically, the welding adaptor is hollow so that cooling water may be delivered via a pipe fitted inside the adaptor to the welding cap to prevent overheating and thus to increase the life span of the electrode.

In use on a car production line, a welding cap will usually have to be changed every day and the welding adaptor every week.

Because the welding cap is a taper fit on the welding adaptor, problems can arise if it should, for any reason, become detached. The end of the adaptor cap upon which the cap fits is of a different external shape to the external shape of the adaptor and thus is not capable of performing the weld properly. Instead, it will usually contact the panels being welded in a slightly different area and will thus cause an imperfect weld to be made and/or cover the panels with water.

If the welder were being operated manually, the person using it could of course easily see that the cap had become detached and would stop work. However, on an automated production line a number of welds may be performed before the missing cap is detected. On a production line such as a car production line, this can be very expensive since to rectify the problem, the line must be shut down for the cap to be refitted. Furthermore, a number of cars with imperfect welds will have to be corrected. Such problems can be extremely time consuming and costly to manufacturers.

Usually the guns are fitted with a flow switch which would cut out if the water does not flow back through the return pipe, i.e. if the cap comes off. However, engineers bypass this switch due to the fact that the robots keep shutting off because of poor water flow. Also, some applications have adapters which are not drilled through to their ends.

In order to overcome this problem, it has been proposed that an insulation pad should be provided on the end of the welding adaptor so that, if the welding tip does become detached, the insulation pad will contact the material to be welded and thus no current will be able to flow and no weld will be made. This prevents any imperfect welds from being made and also enables signalling circuitry to be arranged to indicate to a remote location straight away that there is a problem with a welding head since no current is flowing through it.

Various methods have been proposed to fit an insulation pad to a welding adaptor. To date, these have all proved to be unsatisfactory. The methods which have been tried are as follows:
1. Glueing the insulation pad to the welding adaptor. This has not worked because there are no glues available which are able to work at high temperatures for prolonged periods of time as would be required in a welding head. Thus, the insulation pad tends to become detached.
2. Attempts have been made to use a screw thread to fit the insulation pad into the hole in the welding adaptor through which water cooling is provided. However, this has proved to be too fragile since it is desirable to keep the hole through which water cooling is provided as large as possible, and thus the wall thickness which is required in a sleeve attached to the insulation pad and which bears the screw thread tends to be too thin, making it too fragile and liable to break when the welding adaptor attempts to make a weld. This can then result in welds continuing to be made.
3. It has been proposed to provide a flange on the end of the insulation pad adjacent to the welding head adaptor such that the metal of the welding head adaptor can then be worked around this flange to retain the insulation pad in position. However, this requires an additional manufacturing step after the insulation pad has been put into position, thereby increasing the price of welding head adaptors. Furthermore, it has proved to be not particularly suitable because the wall thickness of the copper retaining the flange tends to wear through more quickly.
4. An interference fit with a sleeve attached to the insulation pad to fit within the water cooling channel. This does not work because when the welding head and adaptor are in use they heat up and expand, thereby increasing the size of the hole. As a result the insulation pad is loosened and will fall off if the electrode cap falls off.

Preferred embodiments of the present invention provide a welding head with an insulation pad which overcomes the above problems. In particular, the welding head adaptor has an annular groove machined inside its water cooling channel adjacent to the end of the adaptor on which a welding tip fits. An insulation pad is provided to fit at this end of the welding head adaptor to cover substantially all of the area of the welding head which could come in contact with material to be welded. It is provided on a short sleeve of the same material on which is provided a flange. This flange fits within the groove in the welding head adaptor. The insulation pad is fitted to the welding head adaptor by a simple press fit via which the flange is introduced to the groove.

This invention is defined with more precision in the appended claims to which reference should now be made.

A preferred embodiment of the invention will now be described in detail, by way of example, with reference to the accompanying drawings in which:
**Figure 1** shows a welding head adaptor for use in an embodiment of the present invention;
**Figure 2** shows an insulation pad for use with the welding head adaptor of Figure 1; and
**Figure 3** shows the welding adaptor with the insulation pad of Figure 2 fitted therein.

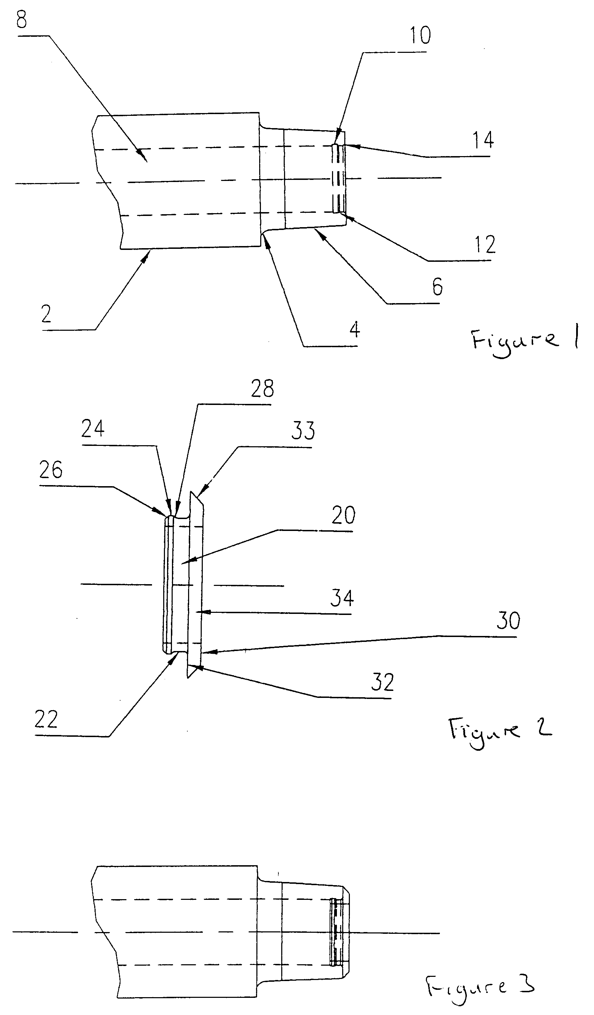

Figure 1 shows the end of a welding adaptor on to which a welding tip is to be fitted. The welding adaptor 2 is substantially cylindrical although it may increase in diameter by a series of stepped shoulders or by flaring towards the end where it connects to the main electrode. It can also be bent at various angles and also machined on shaped sections e.g. square, wedge, hexagon etc. At the end where the welding cap is to be fixed there is provided a shoulder 4 followed by a tapering portion 6. It is over this tapering portion 6 that a welding tip is located by interference fit. As explained above, welding caps are changed every day when welding heads are in constant use.

A hole 8 is provided along the central axis of the welding adaptor. This is used to provide cooling fluid for the welding head. Usually a small pipe will be fitted within this hole along which cooling fluid is pumped. The cooling fluid returns via the gaps between the pipe and the walls of the hole 8.

Sometimes this hole may be pulled back so that it does join, leaving a 1.5mm wall between hole 8 and the fixing hole, this is where it is not desirable to have water flowing over parts that rust if water gets trapped.

At the tapered end 6 of the adaptor, the central hole 8 has machined into it an annular groove 10. This is used to retain a flange of an insulation pad to be fitted to the end of the welding adaptor 2 as will be described below. As can be seen from the figure, the forward end of the groove 10 nearest to the end of the welding adaptor is chamfered. This chamfer may be arranged as an angled cut of e.g., 45°, or it may be a radius cut. A further chamfer 14 is provided at the end of the hole 8. The purpose of this is to make easier the introduction of an insulation pad into the hole to be retained by the groove 10, since the chamfer 14 can be used to lead the insulation pad into the hole.

The insulation pad shown in Figure 2 is formed from a sleeve 20 of insulating material. The main portion 22 of this has a diameter which is slightly less than that of the internal diameter of the hole 8 in the welding adaptor of Figure 1. Towards the end of the sleeve which fits into the welding adaptor, there is provided a flange 24. At its end, this flange is provided with a chamfer 26 which cooperates with the chamfer 14 when the sleeve is introduced into the welding adaptor 2 to lead the sleeve into the hole. The material is sufficiently flexible for the flange 24 to be compressed whilst it is passing through the hole 8. When the flange 24 reaches the groove 10 in the hole 8, it expands to fill the groove and thereby retain the sleeve 22 of the insulation pad in the hole 8. The forward edge of the flange 24 has a chamfered edge 28 which bears against chamfer 12 in the groove 10. It is preferable for this to be chamfered since we have discovered that a right-angled cut on the flange 24 can significantly weaken it and may lead to failure of the flange and subsequent dislodgement of the insulation pad.

At the opposite end of the insulation pad there is provided a much wider flange 30. The rear face 32 of this bears against and substantially covers the end of the welding adaptor when the flange 24 is retained in the groove 10. Preferably, as shown in this embodiment, a chamfer 33 is provided on the outside edge of the flange 30 to reduce the risk of damage to the insulation pad.

A hole 34 is provided all the way through the insulation pad and it is through this that cooling fluid provided by hole 8 in the welding adaptor can be introduced to a welding tip fitted over the tapered portion 6 of the welding adaptor.

Figure 3 shows the welding adaptor of Figure 1 with the insulation pad of Figure 2 fitted at its end. The welding adaptor is then ready to have a welding tip fitted to it.

The insulation pad is made from a high temperature, high performance engineering plastic with tough, rigid and strong characteristics, and very good chemical resistance. Such a material is polyetheretherketone (peek). This has a continuous working temperature of approximately 250°, quite adequate for welding applications. It suffers no significant degradation in steam or high pressure water environments and has a very low flammability rating. It is not soluble in most common solvents and has excellent resistance to a wide range of organic and inorganic liquids. Other materials with similar types of characteristics could be used instead.

The typical size of the welding tips which are used in automated welders are 13 mm, 16 mm and 20 mm diameter. The present invention can be used with any of these. The tapered end 6 of the welding adaptor shown has a taper of which there are four main standards, 1:20 (No.1 and No.2 Morse), 1:10, 1:9.6 and BS 807 (5 degrees inc.) that are used to hold the cap to the adaptor.

Using this embodiment of the present invention enables the problems set forth in the introduction to be overcome. It provides an insulation pad which can be fitted to welding adaptors at the point of manufacture and which will have a life span equivalent to that of the welding adaptor. It does not reduce the length of the taper or require extra force to remove the cap compared to existing designs of adaptors. The insulation pad can be inspected when the welding tip is changed for any signs of weakness in it and if necessary it can be changed. It is provided with a hole of large enough diameter to provide fluid cooling to the welding tip and is configured to prevent any welds being made in the event that the welding tip becomes dislodged.

## Claims

1. A welding adaptor comprising a press-fit insulation pad substantially covering the end of the welding tip receiving portion of the adaptor.

2. A welding adaptor according to claim 1 in which the insulation pad is carried on a sleeve which fits within a hole in the welding adaptor.

3. A welding adaptor according to claim 2 in which the sleeve carries a flange which fits within a groove in the hole in the welding adaptor.

4. A welding adaptor according to claim 3 in which the edge of the flange nearest to the end of the welding adaptor is chamfered.

5. A welding adaptor according to claim 4 in which the corresponding edge of the groove is chamfered.

6. A welding adaptor according to claims 4 or 5 in which the opposite edge of the flange is chamfered.

7. A welding adaptor according to any of claims 2-6 in which the end of the hole in the welding adaptor is chamfered.

8. A welding adaptor according to any of claims 2-7 in which a water cooling hole extends along the welding adaptor, with drilled through or blind.

9. A welding adaptor according to any one of the preceding claims in which the insulation pad is formed from high temperature high performance plastic.

10. A welding adaptor according to claim 9 in which the plastic has a continuous working temperature of approximately 250°C.

11. A welding adaptor according to claims 9 or 10 in which the plastic is polyetheretherketone.

12. A welding adaptor substantially as herein described with reference to the accompanying drawings.
